# EUROPEAN PATENT APPLICATION

(11) **EP 1 933 452 A1**
(43) Date of publication of application: **18.06.2008**
(21) Application number: 07121540.4
(22) Date of filing: 26.11.2007
(51) Int. Cl.: H02P 6/00, H02P 6/08, H02P 6/10

(54) **Control circuit device for a brushless three-phase direct current motor**

(30) Priority: 29.11.2006 IT TO20060847
(71) Applicant: JOHNSON ELECTRIC MONCALIERI S.r.l., 10123 Torino (IT)
(72) Inventor: Perathoner, Marco, 10099 Alpignano (Torino) (IT); Iosca, Francesco, 10154 Torino (IT)
(74) Representative: Quinterno, Giuseppe

(57) **Abstract**

The device comprises a complete bridge circuit (1) including three circuit branches (B1, B2, B3) each of which (B1, B2, B3) comprises an upper commutator (Q1, Q2, Q3) and a lower commutator (Q1', Q2', Q3'), interconnected with each other and connected to the positive pole and respectively to the negative pole of a voltage source (2). The windings or phases (W1, W2, W3) of the motor (M) are each connected to an intermediate point between the two commutators (Q1, Q1'; Q2, Q2'; Q3, Q3') of a corresponding branch (B1, B2, B3) of the bridge circuit (1).

A control and operating unit (ECU) is arranged for controlling in operation the upper commutators (Ql-Q3) and lower commutators (Q1'-Q3') with respective groups of three (SQ1, SQ2, SQ3; SQ1', SQ2', SQ3') operating signals, staggered with respect to one another by approximately 180 electrical degrees, each group of three comprising three operating signals (SQ1, SQ2, SQ3; SQ1', SQ2', SQ3') staggered with respect to one another by 120 electrical degrees and each comprising an active portion which extends for approximately 120 electrical degrees, alternating with an inactive or locking portion which extends for approximately 240 electrical degrees.

Each active portion of each operating signal of at least one group of three (SQ1, SQ2, SQ3 and/or SQ1', SQ2', SQ3') has at least one initial pulse interval (Iᵢ) such that during said interval (Iᵢ) the current (I_{Wi}) in the corresponding winding or phase (Wi) is increased in a non-monotonic manner from a substantially zero initial value to a predetermined final (mean) value (I_{TH}).

## Description

The present invention relates to a control circuit device for a brushless direct current motor.

More specifically, the subject of the invention is a control device for a brushless three-phase motor, comprising
a complete bridge circuit, including three circuit branches connected between the two poles of a direct supply voltage source, each branch comprising an upper electronic commutator and a lower electronic commutator, interconnected with each other and connected to the positive pole and respectively to the negative pole of said source; the windings or phases of the motor each being connected to an intermediate point between the two commutators of a corresponding branch of the bridge circuit, and
electronic control and operating means, arranged for controlling in operation the upper commutators and lower commutators of the bridge circuit with respective groups of three operating signals staggered with respect to one another by approximately 180 electrical degrees, each group of three comprising three operating signals staggered with respect to one another by approximately 120 electrical degrees and each comprising an active portion which extends for approximately 120 electrical degrees, alternating with an inactive or locking portion which extends for approximately 240 electrical degrees.

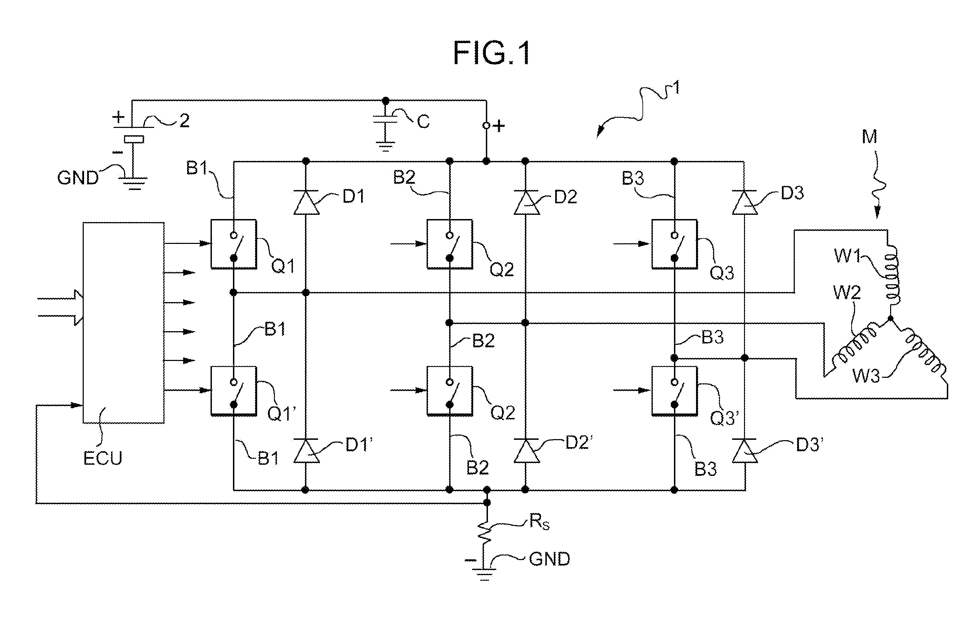

Figure 1 illustrates a control circuit device for a brushless three-phase direct current motor M, the general structure of which corresponds to that of the control circuit device defined above. The control device comprises a complete bridge circuit 1 which includes three circuit branches B1, B2, B3 connected between the two poles of a direct supply voltage source 2 which in the exemplary form of embodiment illustrated has the negative pole connected to an earth conductor GND.

The branches B1, B2, and B3 of the bridge circuit 1 comprise respective upper electronic commutators Q1, Q2 and Q3, and respective lower electronic commutators Q1', Q2' and Q3', interconnected with each other in an orderly manner, and connected to the positive pole and respectively to the negative pole of the source 2.

The bridge circuit 1 is coupled to a brushless motor M provided with three phases or windings W1, W2 and W3, star-connected and each connected to an intermediate point between the two electronic commutators of a corresponding branch of the bridge circuit.

In a manner known *per se,* in parallel with each electronic commutator Q1-Q3, Q1'-Q3' a respective recycling diode D1-D3, D1'-D3' is connected. In addition, likewise in a manner known *per se,* a capacitor C is connected in parallel with the bridge circuit 1.

Between the lower commutators Q1 Q2' and Q3' and the earth GND a shunt resistor R_{S} is interposed for detecting the current flowing in the motor.

Connected to the control inputs of the commutators of the bridge circuit 1 are corresponding outputs of an electronic control and operating unit, indicated overall by ECU. The unit is arranged to operate the electronic commutators of the bridge circuit 1 according to predetermined modes, according to signals applied to it from outside, and optionally to signals generated within it, as well as according to the current flowing in the motor M detected by means of the resistor R_{S}. To the ECU control unit there can be connected for example three position sensors, such as Hall effect sensors or others, intended to detect the momentary position of the rotor of the motor M. Alternatively, the momentary position of the rotor of the motor M may be deduced, in a manner known *per se*, by analysis of the counter electromotive forces developed in the windings or phases W1, W2 and W3 of the motor.

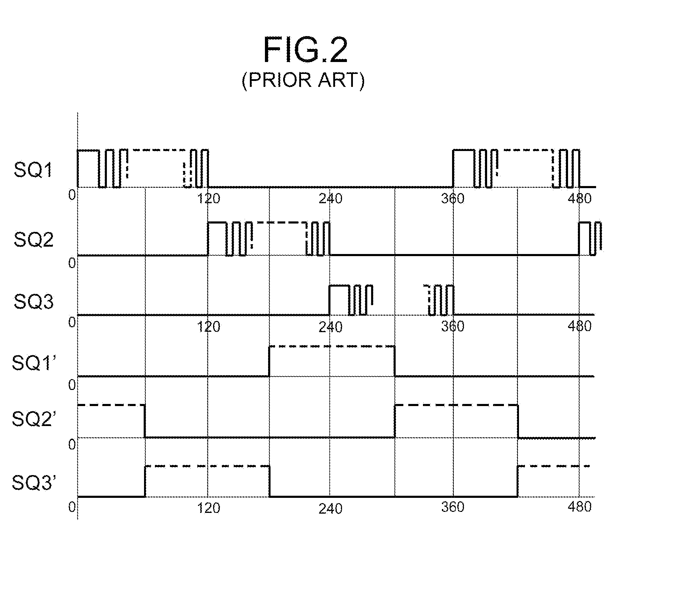

In an operating mode according to the prior art, the electronic unit ECU is arranged to control, in operation, the upper commutators Q1, Q2, Q3 and the lower commutators Q1 Q2' and Q3' of the bridge circuit 1 with respective groups of three operating signals staggered with respect to one another by approximately 180 electrical degrees, each group of three comprising three operating signals staggered with respect to one another by approximately 120 electrical degrees and each comprising an active portion for approximately 120 electrical degrees, alternating with an inactive or locking portion which extends for approximately 240 electrical degrees. The operating signals applied to the electrical commutators of the bridge 1 may, for example, be those of which the exemplary courses are shown qualitatively in Figure 2.

In that figure, the operating signal applied to the generic electronic commutator "i" of the bridge circuit 1 is indicated by SQi.

In the example illustrated in Figure 2, the active portions of the operating signals SQ1, SQ2, SQ3 applied to the upper commutators Q1, Q2, Q3 of the bridge circuit 1 are signals with modulated pulse duration or width (PWM). The active portions of the operating signals SQ1', SQ2', SQ3' applied to the lower electronic commutators Q1 Q2', Q3' may be continuous actuation signals, or pulsed signals, like those applied to the upper commutators. As a further alternative, the operating signals applied to the upper commutators and to the lower commutators may be signals of the type described in the preceding Italian Patent Application TO2006A000283 of the 14th April 2006, in the name of the same Applicant.

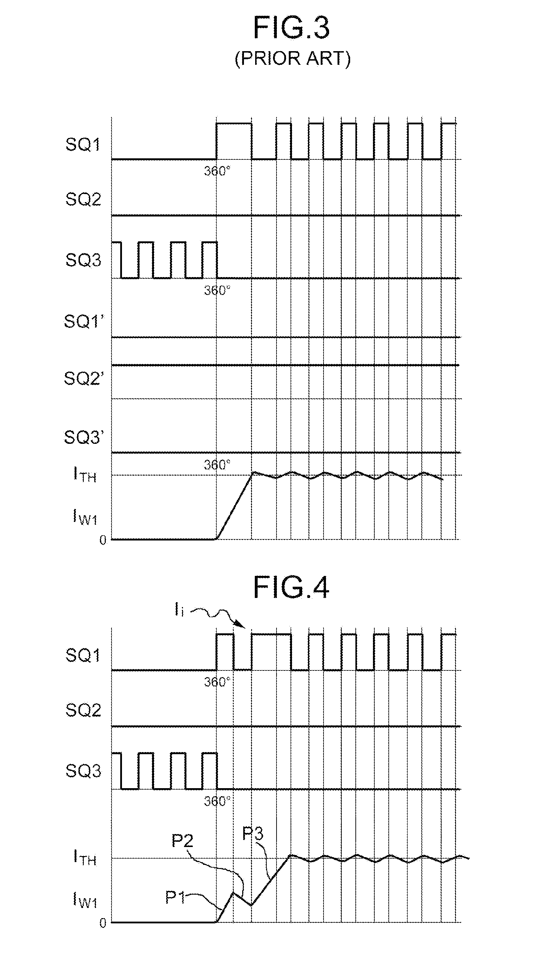

The operating mode according to the prior art illustrated in Figures 2 and 3 is relatively simple to implement: the active portion of each operating signal SQ1, SQ2, SQ3 has a first pulse having a width (duration) capable of causing in the corresponding winding or phase a monotonic increase in the current from a substantially zero initial value to a predetermined final (mean) value I_{TH}, as shown in particular in the lower graph of Figure 3 in relation to the current I_{W1} flowing in the winding or phase W1.

The operating mode according to the prior art described now has the drawback of inducing, at every "switch on" transient of the current in a winding or phase, the generation of a switching noise ("clicking noise"). This noise is generated by the effect of the action of mechanical pinching to which the windings or phases of the motor are subjected by the effect of the strong variation of the current in the commutation phase. In various applications, the clicking noise is annoying and not acceptable.

The clicking noise described above may be substantially reduced if control devices are adopted that are suitable for operating the windings or phases of the motor in such a way that an overlap of current conduction is produced in the phases. These control devices are on the other hand more complex and relatively expensive to implement.

It is an aim of the present invention to provide a control device for a brushless three-phase motor of the type specified above, which makes it possible to reduce substantially or at least to attenuate the clicking noise, in a relatively simple and inexpensive manner.

This aim is achieved according to the invention with a control circuit device of the type specified above, characterized in that the electronic control and operating means are arranged in such a way that each active portion of each operating signal of at least one group of three has at least one initial pulse interval such that during said initial interval the current in the corresponding winding or phase is increased in a non-monotonic manner from the substantially zero initial value to a predetermined final (mean) value.

In one form of embodiment, the electronic control and operating means are conveniently arranged in such a way that in said initial interval the current in the winding or phase in which commutation is to take place is increased from the substantially zero initial value to the predetermined final (mean) value by means of at least a first and a second phase of increase, spaced by an intermediate decrease phase.

Other characteristics and advantages of the invention will become clear from the following detailed description, given purely by way of non-limiting example with reference to the appended drawings, in which:
- Figure 1, already described, illustrates a general structure of a control circuit device for a brushless three-phase direct current motor;
- Figure 2, likewise already described, shows exemplary courses of operating signals according to the prior art for the upper and lower electronic commutators of a bridge circuit according to Figure 1;
- Figure 3, likewise already described, shows on an enlarged scale a part of the graphs of Figure 2, with the addition of a lower graph which shows qualitatively the corresponding course of the current in a phase of the brushless motor; and
- Figure 4 is a series of graphs analogous to those shown in Figure 3, but illustrating therein the *modus operandi* of a control device according to the present invention.

With reference to the drawings, a control circuit device for a brushless three-phase direct current motor M according to the invention has the same general structure illustrated previously with reference to Figure 1.

In such a control device according to the present invention, the ECU unit is indeed arranged to generate operating signals such that each active portion of each operating signal of at least one group of three SQ1-SQ3 and/or SQ1'-SQ3' (Figure 4) has at least one initial pulse interval Iᵢ during which the current I_{Wi} in the corresponding winding or phase Wᵢ is increased in a non-monotonic manner from a substantially zero initial value to a predetermined final (mean) value I_{TH}.

In the mode of implementation represented in Figure 4, the current I_{Wi} flowing in the winding W1 is increased from the substantially zero initial value to the final (mean) value I_{TH} by means of a first and a second phase of increase, P1 and P3, (corresponding to the first two pulses of the interval Iᵢ), spaced by an intermediate decrease phase P2 (corresponding to the interval between the first two pulses of the operating signal SQ1).

The non-monotonic increase of the current in the phases at commutation determines a substantial reduction or at least an appreciable attenuation of the clicking noise.

The operating mode described above according to the present invention can be implemented rather easily, therefore without requiring particularly complicated and expensive control devices.

Naturally, the principle of the invention remaining the same, the forms of embodiment and details of construction may be varied widely with respect to those described and illustrated purely by way of non-limiting example, without thereby departing from the scope of the invention as defined in the attached claims.

## Claims

1. A control circuit device for a brushless three-phase direct current motor (M), comprising
a complete bridge circuit (1) including three circuit branches (B1, B2, B3) connected between the two poles of a direct supply voltage source (2), each branch (B1, B2, B3) comprising an upper electronic commutator (Q1, Q2, Q3) and a lower electronic commutator (Q1 Q2', Q3'), interconnected with each other and connected to the positive pole and respectively to the negative pole of said source (2); the windings or phases (W1, W2, W3) of the motor (M) each being connected to an intermediate point between the two commutators (Q1, Q1' Q2, Q2; Q3, Q3') of a corresponding branch (B1, B2, B3) of the bridge circuit (1), and
electronic control and operating means (ECU), arranged for controlling in operation the upper commutators (Q1-Q3) and lower commutators (Q1'-Q3') of the bridge circuit (1) with respective groups of three (SQ1, SQ2, SQ3; SQ1', SQ2', SQ3') operating signals staggered with respect to one another by approximately 180 electrical degrees, each group of three comprising three operating signals (SQ1, SQ2, SQ3; SQ1', SQ2', SQ3') staggered with respect to one another by approximately 120 electrical degrees and each comprising an active portion which extends for approximately 120 electrical degrees, alternating with an inactive or locking portion which extends for approximately 240 electrical degrees;
the control device being **characterized in that** the control and operating means (ECU) are arranged in such a way that each active portion of each operating signal of at least one group of three (SQ1, SQ2, SQ3 and/or SQ1', SQ2', SQ3') has at least one initial pulse interval (Iᵢ) such that during said interval (Iᵢ) the current (I_{Wi}) in the corresponding winding or phase (Wi) is increased in a non-monotonic manner from a substantially zero initial value to a predetermined final (mean) value (I_{TH}).

2. A control circuit device according to claim 1, wherein the electronic control and operating means (ECU) are arranged in such a way that in said initial interval (Ii) the current (I_{Wi}) in the winding or phase being commutated (Wᵢ) is increased from the substantially zero initial value to the predetermined final (mean) value (I_{TH}) by means of at least a first and a second phase of increase (P1, P3) spaced by an intermediate decrease phase (P2).

3. A control circuit device for a brushless three-phase direct current motor, substantially as described and illustrated, and for the purposes specified.
